# EUROPÄISCHE PATENTANMELDUNG

(11) **EP 3 757 820 A1**
(43) Veröffentlichungstag der Anmeldung: **30.12.2020**
(21) Anmeldenummer: 19182302.0
(22) Anmeldetag: 25.06.2019
(51) Int. Cl.: G06F 17/15

(54) **VERFAHREN ZUR PARAMETRISIERUNG EINER FALTUNGSMATRIX, PROGRAMM UND VORRICHTUNG ZUR DATENVERARBEITUNG**

(71) Anmelder: Carl Zeiss Industrielle Messtechnik GmbH, 73447 Oberkochen (DE)
(72) Erfinder: Sahlmann, Holger, 73431 Aalen (DE)
(74) Vertreter: Patentanwälte Bressel und Partner mbB

(57) **Zusammenfassung**

Die Erfindung betrifft ein Verfahren zur Parametrisierung einer ganzzahligen Faltungsmatrix (FM) für die Bildverarbeitung, wobei das Verfahren folgende Schritte umfasst:
• Bereitstellung einer mit Gleitkommawerten parametrisierten Ausgangsmatrix (AM), wobei eine Spaltenanzahl und eine Zeilenanzahl der Ausgangsmatrix (AM) gleich sind,
• Bestimmen einer Multiplikationsmatrix (MM) durch Multiplikation der Werte der Matrixelemente der Ausgangsmatrix (AM) mit einem Normierungswert (NW),
• Bestimmen einer gerundeten Matrix (GM) durch Runden der Werte der Matrixelemente der Multiplikationsmatrix (MM) auf einen ganzzahligen Wert,
• Bestimmen der Differenz (D) zwischen dem Normierungswert (NW) und der Summe der Werte der Matrixelemente der gerundeten Matrix (GM),

Bestimmen der Faltungsmatrix (FM) durch Verteilen der Differenz (D) auf die Matrixelemente der gerundeten Matrix (GM), sowie ein Programm und eine Vorrichtung zur Datenverarbeitung.

## Beschreibung

Die Erfindung betrifft ein Verfahren zur Parametrisierung einer ganzzahligen Faltungsmatrix für die Bildverarbeitung, ein Programm sowie eine Vorrichtung zur Datenverarbeitung.

Es ist bekannt, Filteroperationen im Rahmen einer Bildverarbeitung durchzuführen, beispielsweise um eine Bildoptimierung zu erreichen. Häufig verwendete Verarbeitungstechniken umfassen beispielsweise ein Bildentrauschen, eine Bildschärfung, eine Gammakorrektur, eine Kontrasterhöhung und eine Anpassung der Helligkeit.

Die DE 10 2013 111 861 A1 offenbart ein Verfahren zur Bildoptimierung, umfassend das Bereitstellen eines Ursprungbildes, Bereitstellen mindestens eines Qualitätsmaßes für die Qualität eines Bildes, Bestimmen mindestens eines bildbestimmenden Parameters durch eine Optimierung des Ursprungsbildes auf Basis des mindestens einen Qualitätsmaßes und Anwenden des mindestens einen bildbestimmenden Parameters auf mindestens ein zu bearbeitendes Bild. Hierbei wird beschrieben, dass das Ursprungsbild durch einen Gauß-Glättungskern (Kernel) geglättet werden kann.

Einer der häufigsten Anwendungsfälle einer derartigen Gauß-Filterung ist eine gewünschte Weich- oder Scharfzeichnung.

Üblicherweise sind die Parameter, also Matrixelemente, des matrixartigen Glättungskerns in Form von Gleitkommawerten gegeben. Problematisch bei der Verwendung derart gleitkommawertbasierter Kerne ist, dass diese zur Verwendung durch eine Recheneinrichtung eine sogenannte Gleitkommaeinheit (FPU, Floating Point Unit) benötigen oder, falls eine solche FPU nicht vorhanden ist, einen hohen Rechenaufwand erzeugen, da dann die gleitkommazahlbasierten Rechenoperationen durch die entsprechende Recheneinrichtung ohne FPU simuliert werden müssen. Hierdurch können also eine Rechenzeit und ein Speicherbedarf für die Durchführung der Bildverarbeitungsmethode unter Anwendung eines mit Gleitkommawerten parametrisierten Kerns in nachteiliger Weise steigen.

Daher stellt sich das technische Problem, ein Verfahren zur Parametrisierung einer Faltungsmatrix für die Bildverarbeitung, ein Programm sowie eine Vorrichtung zur Datenverarbeitung zu schaffen, die eine zeitlich schnelle und/oder eine wenig Speicherplatz benötigende Durchführung einer Bildverarbeitung unter Anwendung der Faltungsmatrix ermöglichen.

Die Lösung des technischen Problems ergibt sich durch die Gegenstände mit den Merkmalen der unabhängigen Ansprüche. Weitere vorteilhafte Ausgestaltungen der Erfindung ergeben sich aus den Unteransprüchen.

Vorgeschlagen wird ein Verfahren zur Parametrisierung einer ganzzahligen Faltungsmatrix für die Bildverarbeitung. Die Faltungsmatrix kann auch als Filterkern oder Kernel bezeichnet werden. Die Parametrisierung bezeichnet hierbei das quantitative Bestimmen von Werten der Matrixelemente der Faltungsmatrix.

Die Faltungsmatrix kann für eine Bildverarbeitungsoperation genutzt werden. Die Bildverarbeitungsoperation kann insbesondere eine diskrete Faltung des zu bearbeitenden Bildes mit der Faltungsmatrix umfassen. Aus einer Faltung der Pixelwerte eines insbesondere zweidimensionalen Abbilds mit der erläuterten Faltungsmatrix ergibt sich ein verarbeitetes Abbild mit durch die Faltungsoperation veränderten Pixelwerten.

### Das Verfahren umfasst die folgenden Schritte:

In einem ersten Schritt erfolgt die Bereitstellung einer mit Gleitkommawerten parametrisierten Ausgangsmatrix. Vorzugsweise sind die Spaltenanzahl und die Zeilenanzahl der Ausgangsmatrix gleich. Es ist jedoch prinzipiell auch vorstellbar, dass die Spalten- und die Zeilenanzahl voneinander verschieden sind. Die Spaltenanzahl und die Zeilenanzahl können insbesondere ungeradzahlig oder geradzahlig sein. Wie nachfolgend noch näher erläutert, kann die Ausgangsmatrix durch dem Fachmann bekannte Verfahren zur Parametrisierung einer gleitkommawertbasierten Matrix erfolgen.

Die Ausgangsmatrix kann hierbei auf einen Ausgangsmatrix-Normierungswert normiert sein. Dies kann bedeuten, dass die Summe aller Matrixelementwerte der Ausgangsmatrix den Ausgangsmatrix-Normierungswert ergibt. Dieser Ausgangsmatrix-Normierungswert kann beispielsweise 1 sein.

In einem zweiten Schritt erfolgt ein Bestimmen einer Multiplikationsmatrix durch Multiplikation der Werte der Matrixelemente mit einem Normierungswert. Insbesondere werden die Werte der Matrixelemente der Multiplikationsmatrix durch Multiplikation jedes Matrixelements der Ausgangsmatrix mit dem Normierungswert bestimmt. Dieser Normierungswert ist von dem erläuterten Ausgangsmatrix-Normierungswert verschieden und insbesondere größer als Eins. Der Normierungswert wird als ganzzahliger Wert bestimmt. Insbesondere ist der Normierungswert ein Potenzwert, der mit einer Basis von Zwei und einem ganzzahligen, positiven Wert als Exponent bestimmt wird. Der Exponent kann beispielsweise 8 oder 16 sein.

In einem dritten Schritt erfolgt ein Bestimmen einer gerundeten Matrix durch Runden aller Werte der Matrixelemente der Multiplikationsmatrix auf einen ganzzahligen Wert. Das Runden kann insbesondere ein Abrunden sein. Allerdings ist es auch vorstellbar, dass das Runden ein Aufrunden oder, je nach Wert eines Matrixelements der Multiplikationsmatrix ein Auf- oder Abrunden ist. So können beispielsweise Werte, die nicht mehr als 0,5 geringer sind als der nächsthöhere ganzzahlige Wert, aufgerundet werden, während Werte, die weniger als 0,5 größer als der nächstniedrigere ganzzahlige Wert sind, abgerundet werden. Bevorzugt werden durch das Auf- und Abrunden die nachfolgend noch näher erläuterten wertinvarianten Eigenschaften der Matrix nicht mehr als ein vorbestimmtes Maß und somit auch das Gesamtverhalten der gerundeten Matrix im Vergleich zum Gesamtverhalten der Ausgangsmatrix , insbesondere bei der Anwendung in der Bildverarbeitung, nicht mehr als ein vorbestimmtes Maß verändert. Ist die Ausgangsmatrix eine Gauss-Matrix, so sollte das Auf- oder Abrunden vorzugsweise derart erfolgen, dass keine Umkehrung der Wertänderung, insbesondere also kein Vorzeichenwechsel der Wertänderung, zwischen verschiedenen Matrixelementen erfolgt.

In einem vierten Schritt erfolgt ein Bestimmen der Differenz zwischen dem Normierungswert und der Summe der Werte aller Matrixelemente der gerundeten Matrix. Diese Differenz ist ein ganzzahliger Wert. Somit weisen alle Matrixelemente der gerundeten Matrix ganzzahlige Werte nach Durchführung des dritten Schritts auf.

In einem fünften Schritt erfolgt ein Bestimmen der ganzzahligen Faltungsmatrix durch Verteilen der Differenz auf die Matrixelemente der gerundeten Matrix. Dies kann insbesondere bedeuten, dass zu den Werten aller Matrixelemente, mehrerer, aber nicht aller Matrixelemente oder aber eines Matrixelements der gerundeten Matrix jeweils ein differenzabhängiger Wert hinzuaddiert oder von diesen Werten der Matrixelemente ein differenzabhängiger Wert abgezogen wird, wobei die Summe dieser hinzuaddierten oder abgezogenen differenzabhängigen Werte der Differenz entspricht. Die hinzuaddierten oder abgezogenen Werte sind jeweils ganzzahlige Werte.

Hierbei können vorzugsweise besondere Verteilstrategien angewendet werden, die nachfolgend noch näher erläutert werden. Eine Verteilstrategie kann insbesondere derart gewählt werden, dass wertinvariante Eigenschaften der Ausgangsmatrix nicht oder nur in einem geringen Maße verändert werden. Wertinvariante Eigenschaften können Eigenschaften der Matrix bezeichnen, die bei einer reinen Skalierung der Werte der Matrixelemente erhalten bleiben. Somit wird durch das Verteilen das Gesamtverhalten der Ausgangsmatrix im Vergleich zum Gesamtverhalten der Ausgangsmatrix, insbesondere bei Anwendungen in der Bildverarbeitung, trotz der Wertänderung von Matrixelementen nicht oder nur in einem geringen Maß verändert. Ist die Ausgangsmatrix eine Gauss-Matrix, so sollte das Verteilen derart erfolgen, dass keine Umkehrung der Wertänderung, insbesondere also kein Vorzeichenwechsel der Wertänderung, zwischen verschiedenen Matrixelementen erfolgt.

Mit anderen Worten können die Werte der Matrixelemente der Ausgangsmatrix Werte gemäß einer idealen Gauß-Verteilung sein. Erfolgt durch das Verteilen reine Skalierung der Werte, so würden sich die Eigenschaften der Gauß-Verteilung nicht ändern bzw. die Profilart der durch die Werte gegebenen Verteilungskurve sich nicht ändern. Allerdings kann es notwendig sein, dass ein Ergebnis einer Bildverarbeitung mit einer nur skalierten Matrix, also z.B. eine Ergebnismatrix, durch eine weitere Skalierung entsprechend angepasst wird. Durch das Runden auf Integer-Werte erfolgt jedoch in der Regel keine reine Skalierung. Somit entsteht eine Abweichung zwischen den Eigenschaften bzw. der Verteilungskurve der gerundeten Matrix und einer rein skalierten Matrix. Diese Abweichung wird gemäß dem vorgeschlagenen Verfahren möglichst gleichmäßig auf die Werte der Matrixelemente verteilt, beispielsweise konzentrisch vom Zentrumelement weg nach außen, wobei der zum Zentrumelement addierte Wert größer als die oder gleich den aber nicht kleiner als die Werte(n) ist, die zu den vom Zentrumelement beabstandeten Matrixelementen addiert werden. Die hierdurch erzeugte Änderung der Gaußcharakteristik ist hierbei akzeptabel. Anschaulich gesprochen kann ein durch das Runden abgeflachte Glockenkurve also in der Mitte nach oben gezogen werden.

Das Verteilen kann insbesondere ein symmetrisches Verteilen sein, insbesondere ein rotationssymmetrisches Verteilen bezogen auf das Zentrumelement der gerundeten Matrix. Dies kann bedeuten, dass die Werte der Matrixelemente, deren Spaltenindex um den gleichen Betrag von dem Spaltenindex des Zentrumelements abweichen und/oder deren Zeilenindex um den gleichen Betrag von dem Zeilenindex des Zentrumelements abweichen, um den gleichen Wert verändert, insbesondere erhöht, werden.

Besteht die Wertänderung in einer Erhöhung, so kann das symmetrische Verteilen bedeuten, dass die Erhöhung mit abnehmender Abweichung des Index des Matrixelements, dessen Wert erhöht werden soll, vom Index des Zentrumelements gleich bleibt oder zunimmt, aber nicht abnimmt. Insbesondere kann die Erhöhung des Werts des Zentrumelements gleich der oder höher als die Erhöhung der Werte der weiteren Matrixelemente sein. Anschaulich gesprochen sollen Matrixelemente, die weiter weg vom Zentrumelement angeordnet sind, weniger stark erhöht werden als Matrixelemente, die dichter am Zentrumelement angeordnet sind.

Besteht die Wertänderung in einer Verringerung, so kann das symmetrische Verteilen bedeuten, dass der Betrag der Verringerung mit abnehmender Abweichung der Indizes voneinander abnimmt. Insbesondere kann die Verringerung des Werts des Zentrumelements gleich der oder geringer als die Verringerung der Werte der weiteren Matrixelemente sein.

Diese Werte, die zu den Werten der Matrixelemente der gerundeten Matrix addiert oder davon abgezogen werden, können eine Änderungswertmenge bilden.

Ist die Ausgangsmatrix eine Gauss-Matrix, so kann beispielsweise der Wert der Änderungswertmenge, der zum Wert des Zentrumelements der gerundeten Matrix beim Verteilen hinzuaddiert wird, der betragsmäßig maximale Wert dieser Änderungswertmenge sein.

Alternativ kann beispielsweise der Wert der Änderungswertmenge, der vom Wert des Zentrumelements der gerundeten Matrix beim Verteilen abgezogen wird, der betragsmäßig minimale Wert dieser Änderungswertmenge sein. Dies schließt aber nicht aus, dass weitere Werte der Änderungswertmenge, die zu den Werten weiterer Matrixelemente der gerundeten Matrix hinzuaddiert oder von diesen abgezogen werden, den gleichen Betrag wie dieser Maximalwert/Minimalwert aufweisen.

Im Ergebnis wird somit eine ganzzahlige Faltungsmatrix, also eine Faltungsmatrix, deren Matrixelemente jeweils einen ganzzahligen Wert aufweisen, gebildet, wobei insbesondere wertinvariante Eigenschaften dieser Faltungsmatrix nicht mehr als ein vorbestimmtes Maß von der mit Gleitkommawerten parametrisierten Ausgangsmatrix abweichen und somit das Ergebnis einer mit der erfindungsgemäß bestimmten ganzzahligen Faltungsmatrix durchgeführten Bildverarbeitung nicht in unerwünschter Weise von dem Ergebnis einer mit der Ausgangsmatrix durchgeführten Bildverarbeitungsoperation abweicht. Gleichzeitig ergibt sich in vorteilhafter Weise, dass die bei der Bildverarbeitung durchgeführten Rechenoperationen keine gleitkommawertbasierten Operationen, sondern ganzzahlbasierte Operationen sind. Hierdurch kann das Verfahren in vorteilhafter Weise zeitlich schnell und mit wenig Rechenaufwand mittels Recheneinrichtungen durchgeführt werden, die nicht über eine FPU verfügen, insbesondere auf integrierten Schaltungen wie einem FPGA (Field Programmable Gate Array) oder anderen ALU (Arithmetic Logic Unit) ohne FPU. Insbesondere ermöglicht das Verfahren eine effiziente Verwaltung und Nutzung von Ressourcen solcher Recheneinrichtungen. Insbesondere ist das vorgeschlagene Verfahren daher an die interne Funktionsweise solcher Recheneinrichtungen angepasst, auf denen es ausgeführt werden kann oder soll.

Das vorgeschlagene Verfahren kann für die Bestimmung von Faltungsmatrizen für Bildverarbeitungsoperationen genutzt werden. Solche können insbesondere in der Koordinatenmesstechnik eingesetzt werden, beispielsweise zur Auswertung von Abbildern, die mit einem optischen Sensor eines Koordinatenmessgeräts erzeugt wurden. Somit kann das Verfahren zur Vermessung von Messobjekten verwendet werden. Selbstverständlich sind aber noch andere Anwendungsfälle denkbar.

In einer weiteren Ausführungsform wird eine rotationssymmetrische Differenzmatrix bestimmt, wobei eine Summe der Werte aller Matrixelemente der Differenzmatrix der Differenz entspricht. Die Differenzmatrix kann hierbei die gleiche Dimension wie die Ausgangsmatrix aufweisen. Weiter kann die Differenzmatrix rotationssymmetrisch in Bezug auf ein Zentrumelement der Differenzmatrix sein. Weiter erfolgt das Verteilen der Differenz auf die Werte der Matrixelemente der gerundeten Matrix, indem die Werte der Differenzmatrix zu den Werten der gerundeten Matrix addiert werden. Dies erfolgt insbesondere, indem die Werte korrespondierender Matrixelemente, also von Matrixelementen mit gleicher Spalten- und Zeilenzahl bzw. gleichem Zeilen- und Spaltenindex, addiert werden.

Hierdurch kann in vorteilhafter Weise eine rechentechnisch einfache Durchführung der Differenzverteilung realisiert werden, was wiederum in vorteilhafter Weise eine zeitlich schnelle und eine wenig Speicherbedarf benötigende Durchführung des vorgeschlagenen Verfahrens ermöglicht.

In einer weiteren Ausführungsform erfolgt das Verteilen der Differenz auf die Matrixelemente der gerundeten Matrix, indem in einem Initialisierungsschritt ein Verteilwert mit dem Wert der Differenz und ein Wert einer Zählervariablen mit der Hälfte der um den Wert 1 reduzierten Spaltenanzahl initialisiert wird, insbesondere im Fall einer Ausgangsmatrix mit ungerader Spaltenanzahl. Weiter wird die ganzzahlige Faltungsmatrix als die gerundete Matrix initialisiert bzw. bestimmt.

Weiter wird in einem ersten Teilschritt eines Verteilungsschritts eine Verteilmenge von Matrixelementen bestimmt, wobei die Verteilmenge die Menge von Matrixelementen umfasst, deren Zeilenindex nicht mehr als den Wert der Zählervariablen von einem Zeilenindex eines Zentrumelements der Ausgangsmatrix und deren Spaltenindex nicht mehr als den Wert der Zählervariablen von dem Spaltenindex des Zentrumelements abweicht.

Weiter wird in einem zweiten Teilschritt das größte ganzzahlige Vielfache der Anzahl der Matrixelemente der Verteilmenge bestimmt, welches kleiner als der Verteilwert ist. Mit anderen Worten wird also das maximale ganzzahlige Vielfache bestimmt, welches aber noch kleiner als der Verteilwert ist.

In einem dritten Teilschritt wird, wenn das größte ganzzahlige Vielfache größer als 0 ist, der Wert des größten ganzzahligen Vielfachen gleichmäßig auf die Werte der Matrixelemente der Verteilmenge verteilt und der Verteilwert wird um den Wert dieses größten ganzzahligen Vielfachen reduziert.

Ein gleichmäßiges Verteilen bedeutet hierbei, dass der Wert jedes Matrixelements der Verteilmenge um den gleichen Wert verändert, insbesondere also erhöht oder erniedrigt wird. Ist das größte ganzzahlige Vielfache 0, so werden die Werte der Matrixelemente der Verteilmenge nicht verändert.

Weiter werden die Werte der Matrixelemente der Verteilmenge zu den Werten der korrespondierenden Matrixelemente der ganzzahligen Faltungsmatrix hinzuaddiert.

Weiter wird in einem vierten Teilschritt die Zählervariable um ein Dekrement, insbesondere 1, reduziert und das Verfahren kehrt zum ersten Teilschritt des Verteilungsschritts zurück, wenn der Verteilwert ungleich 0 und die Zählervariable nach der Reduktion größer als 1 ist. Das Verteilen wird beendet, wenn der Verteilwert 0 ist. Alternativ wird das Verteilen beendet, wenn die Zählervariable 1 beträgt, wobei der Verteilwert zum Wert des Zentrumelements der ganzzahligen Faltungsmatrix addiert wird.

Anschaulich gesprochen wird die Differenz symmetrisch auf Ringe um das Zentrumelement herum verteilt. Hierbei umfasst ein erster Ring (Ring mit der Ordnungszahl 1) um das Zentrumelement acht Matrixelemente, deren Spaltenindexwert und/oder deren Zeilenindexwert sich jeweils um den Wert 1, also der Ordnungszahl des Rings, von dem Spaltenindexwert bzw. von dem Zeilenindexwert des Zentrumelements unterscheidet. Ein zweiter Ring (Ring mit der Ordnungszahl 2) um das Zentrumelement umfasst 16 Matrixelemente, deren Spaltenindexwert und/oder deren Zeilenindexwert sich jeweils um den Wert 2 von dem Spaltenindexwert bzw. von dem Zeilenindexwert des Zentrumelements unterscheidet. Entsprechend umfasst ein n-ter Ringe um das Zentrumelement 8 x n Matrixelemente.

Die Differenz kann so auf die Matrixelemente verteilt werden, dass die Werte Matrixelemente eines Rings jeweils um den gleichen Wert verändert, insbesondere erhöht werden.

Weiter kann die Differenz derart verteilt werden, dass bei einer Erhöhung der Werte der Matrixelemente eines Rings auch die Werte der Matrixelemente der Ringe mit geringerer Ordnungszahl sowie der Wert des Zentrumselements um den gleichen Wert oder einen höheren Wert erhöht werden.

Weiter wird die Differenz vollständig verteilt.

Ist die Differenz beispielsweise 9, können die Werte des Zentrumelements und der Matrixelemente des ersten Rings um 1 erhöht werden. Ist die Differenz beispielsweise 14, können die Werte der Matrixelemente des ersten Rings um 1 und der Wert des Zentrumselements um 6 erhöht werden.

Ist die Differenz beispielsweise 25, so können die Werte des Zentrumelements und der Matrixelemente des ersten Rings und des zweiten Rings um 1 erhöht werden. Ist die Differenz beispielsweise 33, so können die Werte der Matrixelemente des zweiten Rings um 1 und die Werte des ersten Rings als auch des Zentrumselements um 2 erhöht werden. Ist die Differenz beispielsweise 27, so können die Werte der Matrixelemente des ersten und des zweiten Rings um jeweils 1 und der Wert des Zentrumselements um 3 erhöht werden.

Hierdurch ergibt sich in vorteilhafter Weise eine rechentechnisch einfach zu implementierende Verteilung der Differenz auf die Matrixelemente der gerundeten Matrix. Dies wiederum führt in vorteilhafter Weise zu einer schnellen Ausführbarkeit des vorgeschlagenen Verfahrens.

In einer bevorzugten Ausführungsform ist der Normierungswert ein Potenzwert, der mit einer Basis von 2 und einem ganzzahligen, positiven Wert als Exponent bestimmt wird.

Hierdurch ergibt sich in vorteilhafter Weise, dass die Durchführung von Bildverarbeitungsoperationen mit der wie vorgeschlagen bestimmten Faltungsmatrix weiter beschleunigt werden, da insbesondere bei einer Faltungsoperation mit der Faltungsmatrix auch eine Division durch die Summe der Werte aller Matrixelemente, also durch den Normierungswert, erfolgt. Ist dieser Normierungswert der vorgeschlagene Potenzwert, so kann diese Division in vorteilhafter Weise durch eine einfache Verschiebeoperation und somit zeitlich schnell und mit geringem Speicherbedarf durchgeführt werden.

Wird eine Faltungsoperation mit der wie vorgeschlagen bestimmten Faltungsmatrix durchgeführt, so ist das Ergebnis der Faltungsoperation, z.B. eine Ergebnismatrix wie z.B. eine Bildmatrix, aufgrund des vorgeschlagenen Verfahrens zur Bestimmung skaliert. Um diese Skalierung zu kompensieren, also eine Rückskalierung vorzunehmen, kann es dann notwendig sein, das Ergebnis der Faltungsoperation durch den Skalierungsfaktor zu dividieren. Da dieser, wie vorhergehend erläutert, ein Potenzwert, insbesondere der Basis 2, ist, kann diese Division durch eine einfache Register-Schiebeoperation realisiert werden.

In einer weiteren Ausführungsform ist das Runden der Werte der Matrixelemente der Multiplikationsmatrix ein Abrunden. Somit wird der Wert jedes Matrixelements der Multiplikationsmatrix abgerundet. Hierdurch ergibt sich in vorteilhafter Weise eine technisch einfache Implementierbarkeit des Verfahrens.

In einer weiteren Ausführungsform wird/werden eine Dimension der Ausgangsmatrix und/oder die Werte der Matrixelemente der Ausgangsmatrix in Abhängigkeit einer Nutzereingabe und/oder anwendungsabhängig bestimmt.

Beispielsweise kann eine Dimension der Ausgangsmatrix durch eine Nutzereingabe festgelegt werden. Selbstverständlich sind jedoch auch andere Verfahren, die dem Fachmann bekannt sind, zur Bestimmung der Dimension einer Ausgangsmatrix vorstellbar. Entsprechend können die Werte der Matrixelemente der Ausgangsmatrix durch eine Nutzereingabe festgelegt werden.

Auch ist es möglich, durch eine Nutzereingabe mindestens eine charakteristische Eigenschaft der Ausgangsmatrix festzulegen, beispielsweise eine Standardabweichung. Dann können in Abhängigkeit dieser charakteristischen Eigenschaft die Werte der Matrixelemente bestimmt werden.

Auch vorstellbar sind automatisierte Verfahren zur Bestimmung der Dimension und/oder der Werte der Matrixelemente in Abhängigkeit von Anwendungsinformationen, beispielsweise in Abhängigkeit des zu bearbeitenden Abbilds.

Hierdurch ergibt sich in vorteilhafter Weise eine einfache Bereitstellung der Ausgangsmatrix.

In einer weiteren Ausführungsform ist die Ausgangsmatrix eine Gauß-Faltungsmatrix. Diese kann in vorteilhafter Weise zur Bildglättung oder Scharfzeichnung verwendet werden, wodurch diese Bildverarbeitungsoperationen wie vorhergehend erläutert in vorteilhafter Weise auch auf Recheneinrichtungen ohne FPU durchgeführt werden können.

In einer weiteren Ausführungsform ist das Verfahren ein computerimplementiertes Verfahren. Dies wird nachfolgend noch näher erläutert.

Weiter vorgeschlagen wird ein Programm, welches, wenn es auf oder durch einen Computer ausgeführt wird, den Computer bzw. die Recheneinrichtung bzw. die Vorrichtung zur Datenverarbeitung veranlasst, einen, mehrere oder alle Schritte des in dieser Offenbarung dargestellten Verfahrens zur Parametrisierung der ganzzahligen Faltungsmatrix durchzuführen.

Ein Computer kann hierbei jede Art von Datenverarbeitungsgerät sein, insbesondere aber eine der vorhergehend erläuterten Recheneinrichtung oder eine Vorrichtung zur Datenverarbeitung, insbesondere eine programmierbare Recheneinrichtung oder Vorrichtung zur Datenverarbeitung.

Alternativ oder kumulativ wird ein Programmspeichermedium oder Computerprogrammprodukt beschrieben, auf oder in dem das Programm gespeichert ist, insbesondere in einer nicht vorübergehenden, z.B. in einer dauerhaften, Form. Alternativ oder kumulativ wird ein Computer beschrieben, der dieses Programmspeichermedium umfasst. Weiter alternativ oder kumulativ wird ein Signal beschrieben, beispielsweise ein digitales Signal, welches Informationen kodiert, die das Programm repräsentieren und welches Code-Mittel umfasst, die adaptiert sind, einen, mehrere oder alle Schritte des in dieser Offenbarung dargestellten Verfahrens zur Parametrisierung der Faltungsmatrix durchzuführen. Das Signal kann ein physikalisches Signal, z.B. ein elektrisches Signal, sein, welches insbesondere technisch oder maschinell erzeugt wird.

Weiter kann das Verfahren zur Parametrisierung der ganzzahligen Faltungsmatrix ein computerimplementiertes Verfahren sein. So können z.B. ein, mehrere oder alle Schritte des Verfahrens durch einen Computer ausgeführt werden. Eine Ausführungsform für das computerimplementierte Verfahren ist die Benutzung des Computers zur Durchführung einer Datenverarbeitungsmethode. Der Computer kann z.B. zumindest eine Recheneinrichtung, insbesondere einen Prozessor, und z.B. zumindest eine Speichereinrichtung umfassen, um die Daten, insbesondere technisch, zu verarbeiten, z.B. elektronisch und/oder optisch. Ein Prozessor kann ein halbleiterbasierter Prozessor sein.

Weiter beschrieben wird ein Computerprogramm oder ein Computerprogrammprodukt, umfassend Befehle, die bei der Ausführung des Programms durch einen Computer diesen veranlassen, einen, mehrere oder alle Schritte des in dieser Offenbarung dargestellten Verfahrens zur Parametrisierung der ganzzahligen Faltungsmatrix auszuführen. Weiter beschrieben wird ein computerlesbares (Speicher-)Medium, umfassend derartige Befehle. Weiter beschrieben wird ein computerlesbarer Datenträger, auf dem das Computerprogramm (Produkt) gespeichert ist.

Weiter vorgeschlagen wird eine Vorrichtung zur Datenverarbeitung, umfassend Mittel zur Ausführung eines Verfahrens zur Parametrisierung einer ganzzahligen Faltungsmatrix für die Bildverarbeitung gemäß einer der in dieser Offenbarung offenbarten Ausführungsformen. Insbesondere kann die Vorrichtung zur Datenverarbeitung Mittel zur Ausführung der Schritte des beschriebenen Verfahrens umfassen. Weiter kann die Vorrichtung zur Datenverarbeitung einen Prozessor umfassen, der so angepasst/konfiguriert ist, dass er das genannte Verfahren ausführt.

In einer weiteren Ausführungsform ist die Vorrichtung als FPGA ausgebildet oder umfasst mindestens einen FPGA. Dieser ist so angepasst/konfiguriert, dass er das genannte Verfahren ausführt.

In einer weiteren Ausführungsform umfasst die Vorrichtung mindestens eine Recheneinrichtung ohne Gleitkommaeinheit oder ist als solche ausgebildet. Alternativ umfasst die Vorrichtung keine Gleitkommaeinheit.

Die Erfindung wird anhand von Ausführungsbeispielen näher erläutert. Die Figuren zeigen:
- Fig. 1: ein schematisches Flussdiagramm eines erfindungsgemäßen Verfahrens,
- Fig. 2: ein schematisches Flussdiagramm eines Teils des erfindungsgemäßen Verfahrens,
- Fig. 3: ein schematisches Blockschaltbild einer erfindungsgemäßen Vorrichtung,
- Fig. 4: eine beispielhafte Darstellung einer mit Gleitkommawerten parametrisierten Ausgangsmatrix,
- Fig. 5: eine beispielhafte Darstellung einer gerundeten Matrix,
- Fig. 6: eine beispielhafte Darstellung einer gerundeten Matrix nach einem dritten Teilschritt eines Verteilschritts,
- Fig. 7: eine dreidimensionale Darstellung der in Fig. 5 dargestellten Matrix und
- Fig. 8: eine dreidimensionale Darstellung der in Fig. 6 dargestellten Matrix.

Nachfolgend bezeichnen gleiche Bezugszeichen Elemente mit gleichen oder ähnlichen technischen Merkmalen.

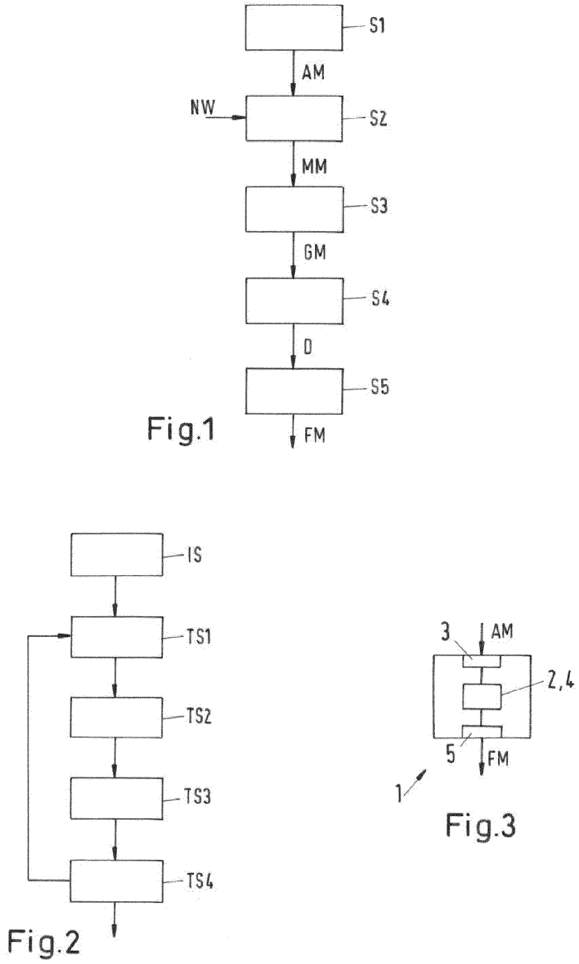

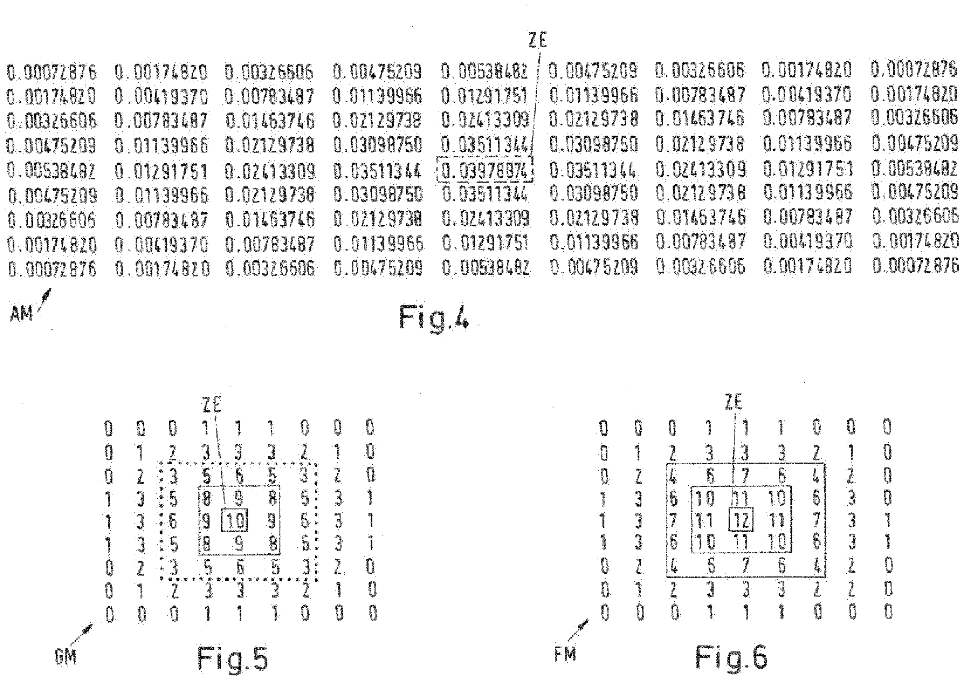

Fig. 1 zeigt ein schematisches Flussdiagramm eines erfindungsgemäßen Verfahrens. In einem ersten Schritt wird hierbei eine mit Gleitkommawerten parametrisierte Ausgangsmatrix AM (siehe Fig. 4) bereitgestellt. Diese Bereitstellung kann mittels dem Fachmann bekannter Verfahren zur Erzeugung von mit Gleitkommawerten parametrisierten Faltungsmatrizen erfolgen. Hierzu kann ein Nutzer z.B. mindestens eine Eigenschaft der Faltungsmatrix vorgeben, wobei dann in Abhängigkeit der Eigenschaft die Ausgangsmatrix AM, insbesondere eine Dimension der Matrix sowie Werte der Matrixelemente der Ausgangsmatrix AM, bestimmt werden. Auch kann die Ausgangsmatrix AM mittels automatisierter Verfahren, beispielsweise in Abhängigkeit des zu bearbeitenden Abbilds, erzeugt werden. Die Ausgangsmatrix AM kann z.B. eine Gauß-Matrix sein. In diesem Fall können Eigenschaften der Ausgangsmatrix AM insbesondere die Koeffizienten der Gausss-Funktion sein, deren Funktionswerte die Werte der Matrixelemente der Ausgangsmatrix AM bilden.

In einem zweiten Schritt S2 erfolgt das Bestimmen einer Multiplikationsmatrix MM durch Multiplikation der Werte der Matrixelemente der Ausgangsmatrix AM mit einem Normierungswert NW. Der Normierungswert NW kann hierbei ein vorbestimmter Normierungswert sein. Vorzugsweise ist der Normierungswert NW ein Potenzwert, der mit einer Basis von 2 und einem ganzzahligen, positiven Wert als Exponent bestimmt wird.

In einem dritten Schritt S3 erfolgt ein Bestimmen einer gerundeten Matrix GM durch Runden der Werte der Matrixelemente der Multiplikationsmatrix MM auf einem ganzzahligen Wert, insbesondere durch ein Abrunden.

In einem vierten Schritt S4 wird eine Differenz D zwischen dem Normierungswert NW und der Summe der Werte der Matrixelemente der gerundeten Matrix GM bestimmt. In einem fünften Schritt S5 wird dann die Faltungsmatrix FM durch Verteilen der Differenz D auf die Werte der Matrixelemente der gerundeten Matrix GM bestimmt.

Es ist möglich, dass im vierten Schritt S4 eine rotationssymmetrische Differenzmatrix bestimmt wird, wobei eine Summe der Werte aller Matrixelemente der Differenzmatrix der Differenz D entspricht. Weiter kann dann im fünften Schritt S5 das Verteilen der Differenz D auf die Werte der Matrixelemente der gerundeten Matrix GM erfolgen, indem die Werte der Differenzmatrix zu den korrespondierenden Werten der gerundeten Matrix GM addiert werden.

Fig. 2 zeigt ein schematisches Flussdiagramm eines fünften Schritts eines erfindungsgemäßen Verfahrens, insbesondere des in Fig. 1 dargestellten Verfahrens, also des Schritts, in dem das Verteilen erfolgt.

In einem Initialisierungsschritt IS wird ein Verteilwert mit dem Wert der Differenz D und ein Wert einer Zählervariable mit der Hälfte der um den Wert 1 reduzierten Spaltenanzahl der Ausgangsmatrix AM initialisiert. Weiter wird die ganzzahlige Faltungsmatrix mit den Werten der gerundeten Matrix initialisiert.

In einem ersten Teilschritt TS1 wird dann eine Verteilmenge von Matrixelementen bestimmt. Die Verteilmenge kann hierbei alle Matrixelemente einer Matrix mit der Dimension der Ausgangsmatrix oder eine Teilmenge davon umfassen. Insbesondere umfasst die Verteilmenge die Menge von Matrixelementen, deren Zeilenindex nicht mehr als den Wert der Zählervariablen von einem Zeilenindex eines Zentrumelements ZE der Ausgangsmatrix und deren Spaltenindex nicht mehr als den Wert der Zählervariable von dem Spaltenindex des Zentrumelements ZE (siehe Fig. 4) abweicht.

In einem zweiten Teilschritt TS2 wird dann das größte ganzzahlige Vielfache der Anzahl der Matrixelemente dieser Verteilmenge bestimmt, wobei dieses größte ganzzahlige Vielfache das größte der ganzzahligen Vielfachen ist, deren Werte kleiner als der Verteilwert sind.

In einem dritten Teilschritt TS3 wird, wenn dieses größte ganzzahlige Vielfache größer als 0 ist, der Wert dieses größten ganzzahligen Vielfachen gleichmäßig auf die Werte der Matrixelemente der Verteilmenge verteilt. Ist das größte ganzzahlige Vielfache jedoch 0, so werden die Werte der Matrixelemente der Verteilmenge nicht verändert.

Weiter werden im dritten Teilschritt TS3 die Werte der Matrixelemente der Verteilmenge zu den Werten der korrespondierenden Matrixelemente der ganzzahligen Faltungsmatrix addiert. Korrespondierende Matrixelemente bezeichnen hierbei Elemente mit dem gleichen Zeilen- und Spaltenindex. Somit wird also im dritten Teilschritt TS3 eine aktualisierte Faltungsmatrix FM bestimmt.

In einem vierten Teilschritt TS4 wird die Zählervariable um ein Dekrement, insbesondere um 1, reduziert und das Verfahren kehrt zum ersten Teilschritt TS1 zurück, wenn der Verteilwert ungleich 0 und die Zählervariable nach der Reduktion um das Dekrement größer als 1 ist.

Alternativ wird das Verteilen beendet, wenn der Verteilwert 0 ist. Weiter alternativ wird das Verteilen beendet, wenn die Zählervariable 1 ist, wobei dann der von 0 verschiedene Verteilwert zum Wert des Zentrumelements ZE der Faltungsmatrix addiert wird. Dann bildet die zuletzt aktualisierte Faltungsmatrix FM die erfindungsgemäß zu bestimmende ganzzahlige Faltungsmatrix FM.

Fig. 3 zeigt ein schematisches Blockschaltbild einer erfindungsgemäßen Vorrichtung 1 zur Datenverarbeitung, wobei die Vorrichtung 1 ein Mittel 2 zur Durchführung der Schritte eines erfindungsgemäßen Verfahrens zur Parametrisierung einer ganzzahligen Faltungsmatrix FM (siehe Fig. 1) umfasst.

Die Vorrichtung 1 kann hierbei eine Eingangsschnittstelle 3 umfassen oder aufweisen, wobei über diese Eingangsschnittstelle 3 eine mit Gleitkommawerten parametrisierte Ausgangsmatrix AM an die Vorrichtung 1 übertragen werden kann. Alternativ kann über die Eingangsschnittstelle 3 auch eine Eingangsinformation zur Bestimmung dieser Ausgangsmatrix AM übertragen werden.

Die Vorrichtung 1 kann dann diese mit Gleitkommawerten parametrisierte Ausgangsmatrix AM für die Parametrisierung einer ganzzahligen Faltungsmatrix FM bereitstellen, insbesondere für ein als Recheneinrichtung, weiter insbesondere als FPGA 4, ausgebildetes Mittel 2. Somit umfasst die Vorrichtung 1 als Mittel zur Durchführung der Schritte diesen FPGA 4.

Weiter kann die Vorrichtung 1 eine Ausgangsschnittstelle 5 umfassen oder aufweisen, wobei über diese Ausgangsschnittstelle 5 die parametrisierte Faltungsmatrix FM bereitgestellt werden kann, beispielsweise für ein externes oder übergeordnetes System.

Fig. 4 zeigt eine beispielhafte Ausgangsmatrix AM, die mit Gleitkommawerten parametrisiert ist. Die Ausgangsmatrix AM hat hier eine Dimension von 9x9. Dies bedeutet, dass die Spaltenanzahl und die Zeilenanzahl 9 beträgt.

Die Ausgangsmatrix AM ist hierbei eine Gauß-Faltungsmatrix, die auf den Wert 1.0 normiert und mit einer Standardabweichung von 2.0 parametrisiert ist. Dem Fachmann ist hierbei ein Verfahren zur Bestimmung der Werte der Matrixelemente einer solchen Ausgangsmatrix AM bekannt. Durch einen gestrichelten Block gekennzeichnet ist das Zentrumelement ZE dieser Ausgangsmatrix AM, welches den Spaltenindex 5 und den Zeilenindex 5 aufweist.

Fig. 5 zeigt eine beispielhafte Darstellung einer gerundeten Matrix GM, die auf Grundlage der in Fig. 4 dargestellten Ausgangsmatrix AM durch Multiplikation der Werte der Matrixelemente dieser Ausgangsmatrix AM mit dem Normierungswert 256 und durch Abrunden bestimmt wurde.

Die Differenz D zwischen dem Normierungswert NW und der Summe der Werte der Matrixelemente dieser gerundeten Matrix GM beträgt hierbei 34, da die Summe 222 beträgt.

In dem Initialisierungsschritt IS des in Fig. 2 dargestellten Verteilschritts S5 wird also der Verteilwert mit dem Wert 34, der Wert der Zählervariablen mit dem Wert 4 und die ganzzahlige Faltungsmatrix FM als die in Fig. 5 dargestellte gerundete Matrix GM initialisiert.

In dem auf diesen Initialisierungsschritt IS folgenden ersten Teilschritt TS1 umfasst die Verteilmenge dann die Menge aller Matrixelemente der gerundeten Matrix GM, also 81 Matrixelemente. Somit beträgt das im zweiten Teilschritt TS2 bestimmte größte ganzzahlige Vielfache, welches kleiner als der aktuelle Verteilwert ist, 0. Entsprechend werden die Werte der Matrixelemente der Verteilmenge im dritten Teilschritt TS3 nicht verändert. Folgend wird die Zählervariable im vierten Teilschritt TS4 auf den Wert 3 reduziert. In dem Folgenden, erneut durchgeführten ersten Teilschritt TS1 ist der Menge aller Matrixelemente 49 und somit immer noch größer als die aktuelle Differenz D, nämlich 34. Entsprechend wird die Zählervariable wieder um ein Dekrement auf den Wert 3 reduziert und die Werte der Matrixelemente der aktualisierten Verteilmenge nicht verändert.

Im erneut folgenden ersten Teilschritt TS1 beträgt die Anzahl der Matrixelemente der Verteilmenge 25 und ist somit kleiner als der Wert der aktuellen Differenz D. In Fig. 5 sind schematisch die Matrixelemente der aktuellen Faltungsmatrix FM durch eine gepunktete Linie umrandet dargestellt, die zu den Matrixelementen der aktuellen Verteilmenge korrespondieren.

Das im zweiten Teilschritt TS2 bestimmte größte ganzzahlige Vielfache der Anzahl der Matrixelemente der Teilmenge beträgt 25. Entsprechend werden die Werte der korrespondierenden Matrixelemente der aktuellen Faltungsmatrix FM im dritten Teilschritt TS3 jeweils um den Wert 1 inkrementiert und der Verteilwert wird um den Wert 25 auf den aktuellen Wert 9 reduziert.

Im vierten Teilschritt TS4 wird die Zählervariable auf den Wert 2 dekrementiert und dann kehrt das Verfahren wieder zum ersten Teilschritt TS1 zurück, wobei der Wert der Zählervariablen dann 1 beträgt. Die nachfolgend bestimmte Verteilmenge umfasst dann 9 Matrixelemente. Als Resultat werden die Werte der zu diesen neuen Matrixelementen der Verteilmenge korrespondierenden Matrixelemente der aktuellen Faltungsmatrix FM, nämlich der Wert des Zentrumelements ZE, sowie die Werte der zu diesem Zentrumelement ZE unmittelbar benachbarten Matrixelemente jeweils um den Wert 1 inkrementiert. Da nach diesem Verteilen der Verteilwert 0 ist, wird das Verfahren beendet.

In Fig. 6 ist die zuletzt aktualisierte Faltungsmatrix FM dargestellt, die der erfindungsgemäß zu bestimmenden parametrisierten ganzzahligen Faltungsmatrix FM entspricht.

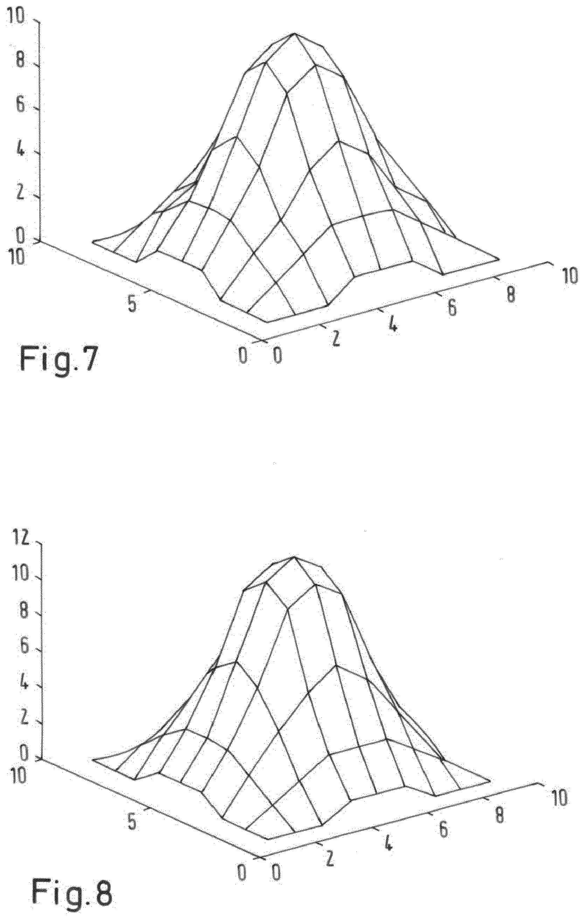

Fig. 7 zeigt eine schematische dreidimensionale Darstellung der in Fig. 5 dargestellten gerundeten Matrix GM. Fig. 8 zeigt eine schematische dreidimensionale Darstellung der in Fig. 6 dargestellten resultierenden parametrisierten Faltungsmatrix FM. Erkennbar ist hierbei der Effekt der auf bestimmte Matrixelemente verteilten Differenz D. Hieraus ist auch ersichtlich, dass die Abweichung der Eigenschaften der resultierenden parametrisierten Faltungsmatrix FM von den Eigenschaften einer Gauß-Faltungsmatrix nur minimal abweichen.

### Bezugszeichenliste

- S1: erster Schritt
- S2: zweiter Schritt
- S3: dritter Schritt
- S4: vierter Schritt
- S5: fünfter Schritt
- AM: Ausgangsmatrix
- MM: Multiplikationsmatrix
- GM: gerundete Matrix
- D: Differenz
- FM: Faltungsmatrix
- NW: Normierungswert
- IS: Initialisierungsschritt
- TS1: erster Teilschritt
- TS2: zweiter Teilschritt
- TS3: dritter Teilschritt
- TS4: vierter Teilschritt
- 1: Vorrichtung zur Datenverarbeitung
- 2: Mittel zur Durchführung
- 3: Eingangsschnittstelle
- 4: FPGA
- 5: Ausgangsschnittstelle
- ZE: Zentrumelement

## Patentansprüche

1. Verfahren zur Parametrisierung einer ganzzahligen Faltungsmatrix (FM) für die Bildverarbeitung, wobei das Verfahren folgende Schritte umfasst:
• Bereitstellung einer mit Gleitkommawerten parametrisierten Ausgangsmatrix (AM),
• Bestimmen einer Multiplikationsmatrix (MM) durch Multiplikation der Werte der Matrixelemente der Ausgangsmatrix (AM) mit einem Normierungswert (NW),
• Bestimmen einer gerundeten Matrix (GM) durch Runden der Werte der Matrixelemente der Multiplikationsmatrix (MM) auf einen ganzzahligen Wert,
• Bestimmen der Differenz (D) zwischen dem Normierungswert (NW) und der Summe der Werte der Matrixelemente der gerundeten Matrix (GM),
• Bestimmen der Faltungsmatrix (FM) durch Verteilen der Differenz (D) auf die Matrixelemente der gerundeten Matrix (GM).

2. Verfahren nach Anspruch 1, **dadurch gekennzeichnet, dass** eine rotationssymmetrische Differenzmatrix bestimmt wird, wobei eine Summe der Werte aller Matrixelemente der Differenzmatrix der Differenz (D) entspricht, wobei das Verteilen der Differenz (D) auf die Werte der Matrixelemente der gerundeten Matrix (GM) erfolgt, indem die Werte der Differenzmatrix zu den Werten der gerundeten Matrix (GM) addiert werden.

3. Verfahren nach einem der vorangegangenen Ansprüche, **dadurch gekennzeichnet, dass** das Verteilen erfolgt, indem in einem Initialisierungsschritt (IS) ein Verteilwert mit dem Wert der Differenz (D), ein Wert einer Zählervariablen mit der Hälfte der um den Wert 1 reduzierten Spaltenanzahl und eine ganzzahlige Faltungsmatrix (FM) als die gerundete Matrix (GM) initialisiert wird, wobei in einem ersten Teilschritt (TS1) eine Verteilmenge von Matrixelementen bestimmt wird, wobei die Verteilmenge die Menge von Matrixelementen umfasst, deren Zeilenindex nicht mehr als den Wert der Zählervariablen von einem Zeilenindex eines Zentrumelements (ZE) der Ausgangsmatrix (AM) und deren Spaltenindex nicht mehr als den Wert der Zählervariable von dem Spaltenindex des Zentrumelements (ZE) abweicht, wobei in einem zweiten Teilschritt (TS2) das größte ganzzahlige Vielfache der Anzahl der Matrixelemente der Verteilmenge, das kleiner als der Verteilwert ist, bestimmt wird, wobei in einem dritten Teilschritt (TS3) der Wert des größten ganzzahligen Vielfachen gleichmäßig auf die Werte der Matrixelemente der Verteilmenge verteilt und der Verteilwert um den Wert des größten ganzzahligen Vielfachen reduziert wird, wenn das größte ganzzahlige Vielfache größer als Null ist, wobei die Werte der Matrixelemente der Verteilmenge nicht verändert werden, wenn das größte ganzzahlige Vielfache Null ist, wobei die Werte der Matrixelemente der Verteilmenge zu den Werten der korrespondierenden Matrixelemente der ganzzahligen Faltungsmatrix (FM) addiert werden, wobei in einem vierten Teilschritt (TS4) die Zählervariable um ein Dekrement reduziert wird und das Verfahren zum ersten Teilschritt zurückkehrt, wenn der Verteilwert ungleich Null und die Zählervariable größer als 0 ist, wobei das Verteilen beendet wird, wenn der Verteilwert Null ist oder wobei der Verteilwert zum Wert des Zentrumelements der Faltungsmatrix (FM) addiert und das Verteilen beendet wird, wenn die Zählervariable 0 ist.

4. Verfahren nach einem der vorangegangen Ansprüche, **dadurch gekennzeichnet, dass** der Normierungswert (NW) ein Potenzwert ist, der mit einer Basis von 2 und einem ganzzahligen, positiven Wert als Exponent bestimmt wird.

5. Verfahren nach einem der vorangegangen Ansprüche, **dadurch gekennzeichnet, dass** das Runden der Werte der Matrixelemente ein Abrunden ist.

6. Verfahren nach einem der vorangegangenen Ansprüche, **dadurch gekennzeichnet, dass** eine Dimension der Ausgangsmatrix (AM) und/oder die Werte der Matrixelemente der Ausgangsmatrix (AM) in Abhängigkeit einer Nutzereingabe und/oder anwendungsabhängig bestimmt wird/werden.

7. Verfahren nach einem der vorangegangenen Ansprüche, **dadurch gekennzeichnet, dass** die Ausgangsmatrix (AM) eine Gauss-Faltungsmatrix ist.

8. Verfahren nach einem der vorangegangenen Ansprüche, **dadurch gekennzeichnet, dass** das Verfahren ein computerimplementiertes Verfahren ist.

9. Programm, welches, wenn es auf oder durch einen Computer ausgeführt wird, den Computer veranlasst, einen, mehrere oder alle Schritte eines Verfahrens zur Parametrisierung einer ganzzahligen Faltungsmatrix (FM) für die Bildverarbeitung gemäß einem der Ansprüche 1 bis 8 durchzuführen.

10. Vorrichtung zur Datenverarbeitung, umfassend Mittel (2) zur Durchführung der Schritte eines Verfahrens zur Parametrisierung einer ganzzahligen Faltungsmatrix (FM) für die Bildverarbeitung gemäß einem der Ansprüche 1 bis 8 durchzuführen.

11. Vorrichtung nach Anspruch 10, **dadurch gekennzeichnet, dass** die Vorrichtung (1) als FPGA (4) ausgebildet ist oder einen FPGA umfasst.

12. Vorrichtung nach Anspruch 11, **dadurch gekennzeichnet, dass** die Vorrichtung (1) als Recheneinrichtung ohne Gleitkommaeinheit ausgebildet ist oder keine derartige Einheit umfasst.
